**Europäisches Patentamt**

**European Patent Office**

**Office européen des brevets**

(19)

(11) Veröffentlichungsnummer: **0 210 399**

**B1**

(12) # EUROPÄISCHE PATENTSCHRIFT

(45) Veröffentlichungstag der Patentschrift:
**31.05.89**

(21) Anmeldenummer: **86108159.4**

(22) Anmeldetag: **18.06.86**

(51) Int. Cl.⁴: **B 64 C 9/16,** B 64 C 9/32

(54) **Tragflügel mit ausfahrbarer Klappe und veränderbarer Wölbung.**

(30) Priorität: **31.07.85 DE 3527497**

(43) Veröffentlichungstag der Anmeldung:
**04.02.87 Patentblatt 87/6**

(45) Bekanntmachung des Hinweises auf die Patenterteilung:
**31.05.89 Patentblatt 89/22**

(84) Benannte Vertragsstaaten:
**FR GB IT NL**

(56) Entgegenhaltungen:
**DE-A-2 839 050**
**GB-A-2 060 520**

(73) Patentinhaber: **Deutsche Airbus GmbH,
Arabellastrasse. 30, D-8000 München 81 (DE)**

(72) Erfinder: **Krafka, Herfried, Rue de Fenouillet,
F-31200 Toulouse (FR)**
Erfinder: **Jendrian, Henry, 4 Rue de Larzac, F-31170
Tournefeuille (FR)**

EP 0 210 399 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf einen Tragflügel mit ausfahrbarer Klappe und veränderbarer Wölbung entsprechend dem Oberbegriff des Anspruchs 1.

Ein derartiger Tragflügel ist z. B. durch die DE-OS-3 039 121 vorbekannt. Bei dieser Anordnung ist zwischen dem festen vorderen Flügelteil und der Klappe bzw. dem Ruder ein Zwischenflügel angeordnet, der bei der Klappenverstellung oder bei der Veränderung der Flügelwölbung mit verstellt werden muß. Die Verstellung des Zwischenflügels und der Klappe erfolgt in Kulissenführungen mit Rollen. Die Bewegungen des Zwischenflügels und der Klappe sind dabei zwangsläufig miteinander verbunden, so daß z. B. bei größerem Ausschlag des Zwischenflügels zwangsläufig zwischen diesem und der Klappe ein Schlitz gebildet wird.

Die Aufgabe der Erfindung besteht darin, einen Tragflügel mit ausfahrbarer Klappe und veränderbarer Wölbung zu schaffen, bei dem das Ausfahren der Klappe und die Änderung der Wölbung zusammen und getrennt voneinander in einfacher Weise zu betätigen sind und dabei eine Spaltbildung zwischen der Klappe und einem Spoiler verhindert bzw. erzeugt wird. Gemäß der Erfindung erfolgt die Lösung der Aufgabe durch die im Patentanspruch 1 wiedergegebenen Merkmale. Weiterbildende Merkmale sind in den Unteransprüchen 2 bis 9 aufgezeigt.

Der wesentliche Vorteil der Erfindung besteht in der einfachen Lösung für die Aufgabe, das Ausfahren der Klappe und die Änderung der Wölbung mit getrennten Betätigungselementen durchzuführen. Dieses wird dadurch erzielt, daß alle Betätigungselemente für die Klappe innerhalb der Ausleger und diejenigen für die Veränderung der Wölbung flügelfest angebracht sind. Dabei sind alle Teile für diese Betätigungselemente innerhalb der Kontur der Ausleger angeordnet und stören dadurch nicht die Strömung um den Tragflügel. Besonders vorteilhaft ist, daß die Zahnräder der Schlitten in den Führungskanälen der Ausleger mit Zahnzungen an den Klappen zusammenwirken, weil dadurch wesentlich größere Ausfahrwege der Klappen gegenüber den Schlittenbewegungen in den Führungskanälen ermöglicht werden. Bei einer Anordnung von mehreren Klappen kann ein mittlerer Ausleger die Führungskanäle mit den Schlitten und Zahnrädern an beiden Seiten aufnehmen, wodurch gegenüber bekannten Ausführungen, bei denen jede Klappe einen eigenen Ausleger oder Zwischenflügel haben muß, an Material und Fertigungsaufwand gespart wird. Durch die Erfindung wird auch ermöglicht, den Spoiler zur besseren Anpassung an die Klappe vorzuspannen und mit Schlitzen zu versehen. Die Führungskanäle in den Auslegern können in ihrer Form und Länge entsprechend der Funktion der Klappen wahlweise gestaltet werden. So besteht die Möglichkeit, bei als Querruder wirkenden Klappen, den Ausfahrweg zu begrenzen und zwischen der ausgefahrenen Klappe und dem Spoiler keinen Spalt vorzusehen oder Klappen mit langem Ausfahrweg und einem Spalt entsprechend einer Landeklappenanordnung zu konzipieren.

Zusätzlich besteht der Vorteil noch darin, daß diese Erfindung auch für Klappen an der Flügelvorderkante anwendbar ist.

Weitere Vorteile und Einzelheiten der Erfindung ergeben sich aus der nachstehenden Beschreibung eines Ausführungsbeispieles anhand der Zeichnung. Es zeigen

Fig. 1 einen in Sehnenrichtung verlaufenen Teilschnitt durch einen hinteren Flügelteil mit der Kinematik zum Ausfahren einer Landeklappe;

Fig. 2 einen Schnitt in Richtung II - II durch die Fig. 1;

Fig. 3 eine stark vereinfachte Darstellung zur Veranschaulichung eier Wölbungsveränderung des hinteren Flügelteils;

Fig. 4 eine Seitenansicht eines zwischen dem festen Flügelteil und der Klappe angeordneten Spoilers und

Fig. 5 eine Draufsicht auf einen Spoiler entsprechend Fig. 4.

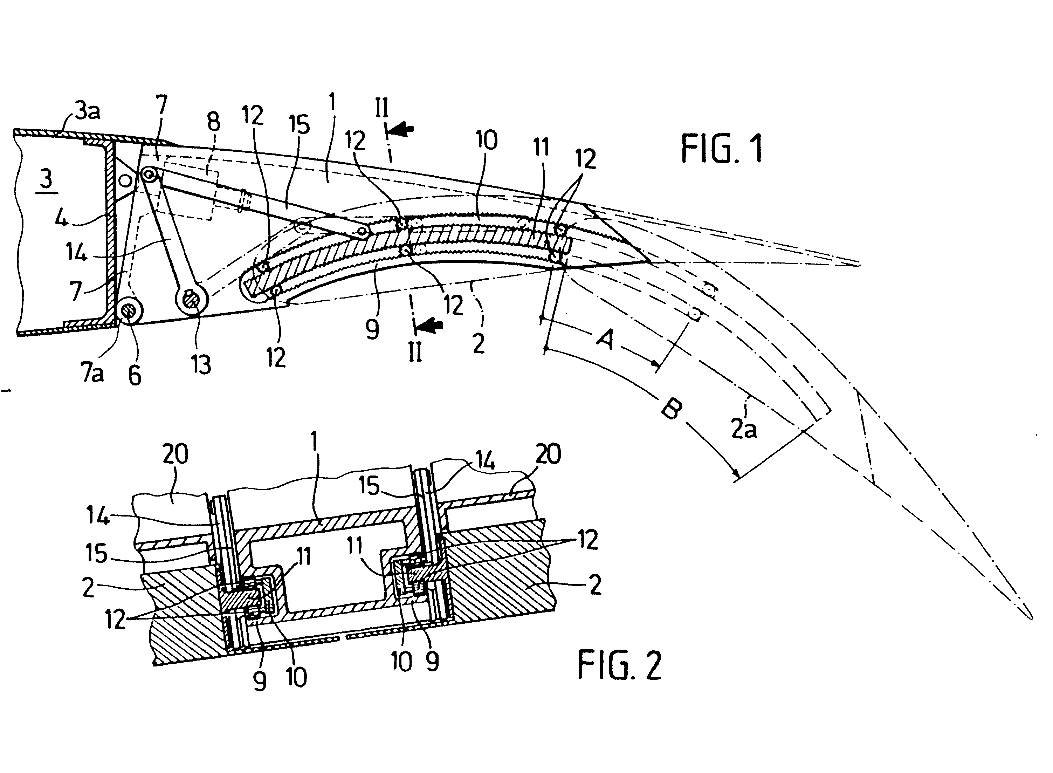

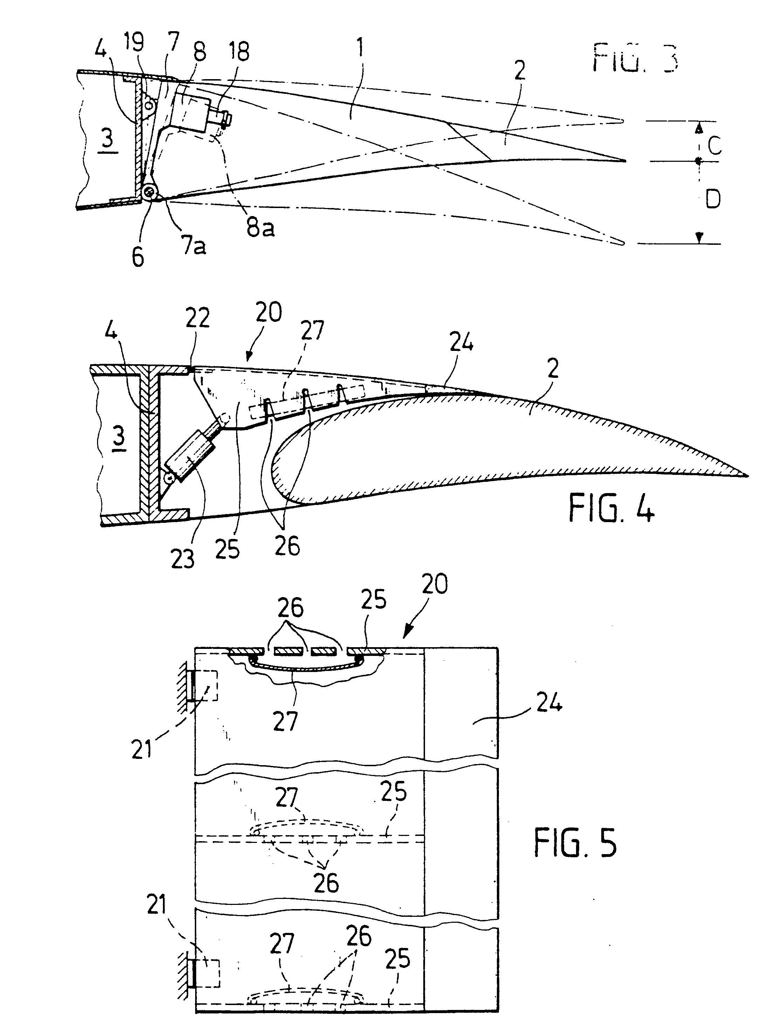

In der Darstellung der Fig. 1 ist an einem hinteren Flügelteil 3 ein Ausleger 1 für eine strichpunktiert dargestellte Landeklappe 2 um eine am hinteren Flügelholm 4 angelenkte Achse schwenkbar befestigt. Der Ausleger 1 ist an seinem dem Flügelholm 4 zugewandten Ende durch einen Beschlag 7 versteift, der auch eine Lagerbuchse 7a für die Achse 6 umfaßt. Weiterhin ist an dem Beschlag 7 ein gestrichelt dargestellter Antrieb 8 zu erkennen, dessen Funktion anhand der Fig. 3 erläutert wird. Am Ausleger 1 ist an der Seite - in Sehnenrichtung gesehen - ein Führungskanal 9 angebracht, in dem ein Schlitten 10 hin- und herbewegt werden kann.

Der Schlitten 10 ist mit sechs Zahnrädern 12 versehen, deren Zähne in eine zwischen ihnen angeordnete, an der Landeklappe 2 befestigte Zahnzunge 11 eingreifen. Durch die Bewegung des Schlittens 10 wird somit über die Zahnräder 12 und die Zahnzunge 11 die Landeklappe 2 in Richtung des Führungskanals 9 aus- bzw. eingefahren. Der Antrieb des Schlittens 10 erfolgt über eine Drehwelle 13, deren hier nicht dargestellter Antrieb z. B. durch einen Elektro- oder Hydraulikmotor erfolgen kann. Auf die Drehwelle 13 ist eine Gelenkkurbel 14 gesetzt, die wiederum mit einer Kurbelstange 15 verbunden ist, die den Schlitten 10 antreibt. In der Fig. 1 sind in ausgezogener Darstellung die Betätigungselemente für die eingefahrene Landeklappe 2 dargestellt. Die gestrichelte Darstellung zeigt die Betätigungselemente für die ausgefahrene Landeklappe 2a. Durch die Übersetzung zwischen den Zahnrädern 12 und der Zahnzunge 11 ist es möglich, mit einer Bewegungsstrecke A des Schlittens 10 einen etwa doppelt so langen Ausfahrweg B der Landeklappe 2 zu erzielen. Seitlich zum Ausleger 1 und die Klappe 2 teilweise überdeckend, ist am Hinterholm 4 ein Spoiler 20 schwenkbar angeordnet.

Die prinzipielle Darstellung der Betätigungselemente für eine Landeklappe nach Fig. 1 kann mit nur wenig geänderter Anordnung auch für das Ausfahren eines Querruders, eines anderen Ruders oder einer Klappe an der Flügelvorderkante oder einer anderen Klappe angewendet werden. Dabei kann der Führungskanal 9 auch so angebracht werden, daß nach dem Ausfahren und in der entsprechenden Stellung des Ruders oder der Klappe zwischen diesem bzw. dieser und dem Spoiler 20 ein Spalt verbleibt oder eine Spaltbildung verhindert wird.

Der in der Fig. 2 dargestellte Schnitt II - II durch die Fig. 1 zeigt, daß der Ausleger 1 mit Führungskanälen 9 und Betätigungselementen 10 bis 15 für zu beiden Seiten angeordneten Landeklappen 2 versehen ist. Bei dieser Ausführung werden die Schlitten 10 zur einwandfreien Parallelführung und aus Fertigkeitsgründen in nicht dargestellter Weise durch einen Bügel miteinander verbunden.

In der Fig. 3 ist stark vereinfacht die Betätigung des Auslegers 1 zusammen mit der Landeklappe 2 zur Veränderung der Flügelwölbung dargestellt. Der im Ausleger 1 angebrachte Beschlag 7 mit dem Lagerauge 7a für die Achse 6 trägt auch den Antrieb 8, der eine Spindel 18 bewegen kann oder der sich entlang der Spindel 18 bewegt. Die Spindel 18 ist mit einem Befestigungsauge 19 am Flügelholm 4 angelenkt. Das Hin- und Herfahren des Antriebes 8 auf der Spindel 18 erzeugt z. B. eine Drehbewegung des Auslegers 1 um die Achse 6, wodurch eine variable Wölbung des Flügelprofils erzielt wird. Entsprechend den strichpunktiert dargestellten Umrissen des Auslegers 1 mit der Landeklappe 2 ist im dargestellten Fall eine Wegänderung der Flügelspitzen um eine Strecke C nach oben und eine Strecke D nach unten zu erzielen. Der nach unten ausgefahrenen Strecke D entspricht die strichpunktierte Darstellung des Antriebes 8a.

In den Fig. 4 und 5 ist dargestellt daß die obere Abdeckung des Raumes zwischen dem Flügelholm 4 und der Landeklappe 2 als Spoiler 20 ausgebildet ist. Zur besseren Erläuterung sind hier nur die für den Spoiler 20 wesentlichen Teile dargestellt. Der Spoiler 20 ist mit nur in der Fig. 5 schematisch dargestellten Beschlägen 21 um einen Drehpunkt 22 am Flügelholm 4 drehbar gelagert und wird betätigt durch einen am Flügelholm 4 gelenkig befestigten Aktuator 23. Um zu vermeiden, daß der Spoiler 20 mittels einer zusätzlichen Kinematik bei der Wölbungsveränderung mitgeführt werden muß, ist dieser in Sehnenrichtung des Flügels elastisch ausgebildet. Mittels einer Blattfeder 27 ist der Spoiler 20 eine Wölbung erzeugend vorgespannt und der Aktuator drückt dabei mit einer Vorlast eine aus abriebfestem Kunststoff bestehende Hinterkante 24 des Spoilers 20 gegen die Landeklappe 2, wobei dieser an den Enden und in der Mitte - in Richtung der Flügelstreckung gesehen - mit Stegen 25 versehen ist, die Einschnitte 26 aufweisen. Nach dem Ausfahren der Landeklappe 2 kann sich der Spoiler 20 nur soweit nach unten durchbiegen, bis die Einschnitte 26 aufeinander liegen. Somit wird die Spoilerauslenkung nach unten mit Hilfe der Einschnitte 26 begrenzt. Durch diese Ausbildung des Spoilers liegt dieser trotz unterschiedlicher Einstellung der Flügelwölbung bis zur gewünschten Stellung der Klappe an dieser an, um dann jedoch z. B. in deren Endstellung, zwischen dieser und seiner begrenzten Auslenkposition einen Spalt zu bilden.

## Patentansprüche

1. Tragflügel mit an einem tragenden Flügelteil verstellbar angeordneten Ausleger (1), an dem mindestens eine zum Teil mit einem Spoiler (20) abgedeckte und in das Flügelprofil einbezogene Klappe (2) angebracht ist, die nach hinten und unten ausfahrbar ist, und mit einer am hinteren Flügelteil veränderbaren Wölbung, dadurch gekennzeichnet, daß der Ausleger (1) einen zu der Klappe (2) hin offenen, in Richtung der Ausfahrbewegung der Klappe (2) sich erstreckenden Führungskanal (9) aufweist, in dem ein durch Gelenkstangen (14, 15) verschiebbarer und mit seitlichen Zahnrädern (12) versehener Schlitten (10) geführt ist, daß die Klappe (2) seitlich mit einer Zahnzunge (11) versehen ist, die zwischen die Zahnräder (12) des Schlittens (10) eingreift und beim Verschieben des Schlittens gleichgerichtet mitbewegt wird, daß durch eine Übersetzung zwischen den an dem Schlitten (10) angebrachten Zahnrädern (12) und den Zähnen der Zahnzunge (11) die Klappe (2) einen längeren Ausfahrweg (B) als die Bewegungsstrecke (A) des Schlittens zurücklegt, daß der Ausleger (1) mit der Klappe (2) zur Veränderung der Flügelwölbung um eine flügelfeste Achse (6) schwenkbar ist, und daß der am Hinterholm (4) des Flügels (3) schwenkbar gelagerte und mittels eines Aktuators (23) betätigbare Spoiler (20) für eine Anlage an der Klappe (2) unter Vorspannung haltbar ist.

2. Tragflügel nach Anspruch 1, dadurch gekennzeichnet, daß eine Antriebswelle (13) zur Betätigung der Gelenkstangen (14, 15) für den Schlitten (10) im Ausleger (1) gelagert ist.

3. Tragflügel nach den Ansprüchen 1 bis 2, dadurch gekennzeichnet, daß beim gleichgerichteten Ausfahren von mindestens zwei Klappen (2) der Ausleger (1) zwischen den beiden Klappen angeordnet und mit zwei Führungskanälen (9) versehen ist, in denen zwei miteinander verbundene Schlitten (10) geführt sind.

4. Tragflügel nach Anspruch 1 bis 3, dadurch gekennzeichnet, daß der Ausleger (1) innerhalb einer durchgehenden Klappe (2) angeordnet ist, und die Schlitten (10) unabhängig voneinander betätigbar sind.

5. Tragflügel nach Anspruch 1, dadurch gekennzechnet, daß das Verschwenken des Auslegers (1) zur Veränderung der Flügelwölbung durch einen am Ausleger montierten Antrieb (8) erfolgt, der eine am Flügel (3) angelenkte Spindel (18) bewegt.

6. Tragflügel nach einem oder mehreren der Ansprüche 1 bis 5, dadurch gekennzeichnet, daß der Spoiler (20) mit mindestens zwei in die Flügelkontur hineinragenden Stegen (25) versehen ist, die mehrere Einschnitte (26) zur Begrenzung seiner Verwölbung aufweisen.

7. Tragflügel nach Anspruche 6, dadurch gekennzeichnet, daß längs der Stege (25) ein, die Einschnitte (26) übergreifendes Federelement zur Erzeugung der Spoilervorspannung (27) angeordnet ist.

8. Tragflügel nach einem oder mehreren der Ansprüche 1 bis 7, dadurch gekennzeichnet, daß der Führungskanal (9) im Ausleger (1) derart gestaltet ist, daß zwischen der voll ausgefahrenen Klappe (2) und dem Spoiler (20) ein Spalt vorhanden ist, während bei den vorhergehenden Zwischenstellungen der Klappe (2) eine Spaltbildung verhindert wird.

9. Tragflügel nach Anspruch 1, dadurch gekennzeichnet, daß die Veränderung der Flügelwölbung und die Klappenbetätigung zusammen oder unabhängig voneinander durchführbar ist.

## Claims

1. An airfoil wing having an arm (1) which is arranged adjustably on a supporting wing part and on which is installed at least one flap (2) which is partly covered with a spoiler (20) and which is incorporated into the wing profile and which is extensible rearwards and downwards, and having a curvature which is variable on the rear wing part, characterized in that the arm (1) has a guide channel (9) which is open towards the flap (2) and which extends in the direction of the extension movement of the flap (2) and in which a sliding carriage (10) which is displaceable by hinged rods (14, 15) and which is provided with lateral toothed wheels (12) is guided, in that the flap (2) is provided laterally with a toothed tongue (11), which engages between the toothed wheels (12) of the sliding carriage (10) and is co-moved equidirectionally upon the displacement of the sliding carriage, in that through a transmission between the toothed wheels (12) installed on the sliding carriage (10) and the teeth of the toothed tongue (11) the flap (2) covers a longer extension path (B) than the movement distance (A) of the sliding carriage, in that the arm (1) is swingable with the flap (2) for the variation of the wing curvature about a wing-fast spindle (6), and in that the spoiler (20) which is swingably mounted on the rear spar (4) of the wing (3) and which is actuable by means of an acutator (23) for a holdable abutment under bias against the flap (2).

2. An airfoil wing according to claim 1, characterised in that a driving shaft (13) for the actuation of the articulated rods (14, 15) for the sliding carriage (10) is mounted in the arm (1).

3. An airfoil wing according to claims 1 to 2, characterised in that upon the equidirectional extension of at least two flaps (2) the arm (1) is arranged between the two flaps and is provided with two guide channels (9), in which two sliding carriages (10) which are connected together are guided.

4. An airfoil wing according to claim 1 to 3, characterised in that the arm (1) is arranged inside a continuous flap (20), and the sliding carriages (10) are actuable independently of one another.

5. An airfoil wing according to claim 1, characterised in that the swivelling of the arm (1) for the variation of the wing curvature is effected by a drive (8) which is mounted on the arm and which moves a spindle (15) hinged to the wing (3).

6. An airfoil wing according to one or more of claims 1 to 5, characterised in that the spoiler (20) is provided with at least two webs (25) which project into the wing contour and which have several notches (26) for the limitation of its curvature.

7. An airfoil wing according to claim 6, characterised in that arranged along the webs (25) is a spring element, straddling the notched (26), for the generation of the spoiler bias (27).

8. An airfoil wing according to one or more of claims 1 to 7, characterised in that the guide channel (9) in the arm (1) is shaped in such a way that a gap is present between the fully extended flap (2) and the spoiler (20), whilst in the case of the preceding intermediate positions of the flap (2) the formation of a gap is prevented.

9. An airfoil wing according to claim 1, characterised in that the variation of the wing curvature and the flap actuation can be carried out together or independently of one another.

## Revendications

1. Voilure portante comprenant un support en porte-à-faux (1) qui est disposé de façon reglable sur une partie d'aile portante et sur lequel est monté au moins un volet (2) qui fait partie du profil d'aile, qui est recouvert au moins en partie à l'aide d'un spoiler (20) et qui peut être sorti vers l'arrière et vers le bas, la courbure de l'aile étant modifiable à la partie arrière de l'aile, caractérisée par le fait que le support (1) présente un canal de guidage (9) qui est ouvert vers le volet (2), qui s'étend dans la direction de sortie du volet (2) et dans lequel est guidé un chariot (10) deplaçable à l'aide de biellettes articulées (14, 15) et muni de pignons lateraux

(12), que le volet (2) est muni latéralement d'une languette dentée (11) qui s'engage entre les pignons (17) du chariot (10) et qui, lors du déplacement du chariot, est déplacée dans le même sens, que par un rapport de multiplication entre les pignons (12) disposés sur la chariot (10) et les dents de la languette dentée (11), le volet (2) parcourt une course de sortie (B) plus longue que la course de mouvement (A) du chariot, que le support (1) est pivotant avec le volet (2) autour d'un axe (6) solidaire de l'aile, en vue de la variation de la courbure de l'aile, et que le spoiler (20) monté pivotant sur le longeron arrière (4) de l'aile (3) et actionnable l'aide d'un actionneur (23) peut être maintenu sous pré-tension en vue d'une application contre le volet (2).

2. Voilure portante suivant revendication 1, caractérisée par le fait que l'arbre d'entraînement (13) en vue de l'actionnement des biellettes articulées (14, 15) par le chariot (10) est monté dans le support (1).

3. Voilure portante suivant les revendications 1 à 2, caractérisée par le fait que lors de la sortie dans le même sens d'au moins deux volets le support (1) est disposé entre les deux volets et est muni de deux canaux de guidage (9) dans lesquels sont guidés deux chariots (10) reliés entre eux.

4. Voilure portante suivant revendication 1 à 3, caractérisée par le fait que le support (1) est disposé à l'intérieur d'un volet (2) continu et les chariots (10) sont actionnables indépendamment l'un de l'autre.

5. Voilure portante suivant revendication 1, caractérisée par le fait que le pivotement du support (1) en vue de la variation de la courbure de l'aile s'effectue par un moteur d'entraînement (8) monté sur le support et actionnant une tige filetée (18) articulée sur l'aile (3).

6. Voilure portante suivant une ou plusieurs des revendications 1 à 5, caractérisée par le fait que le spoiler (20) est muni d'au moins deux nervures (25) pénétrant dans le contour de l'aile et présentant plusieurs entailles (26) pour limiter sa courbure.

7. Voilure portante suivant revendication 6, caractérisée par le fait qu'un élément de ressort (27) recouvrant les entailles (26) est disposé le long des nervures (25) pour produire la pré-tension du spoiler.

8. Voilure portante suivant une ou plusieurs des revendications 1 à 7, caractérisée par le fait que le canal de guidage (9) dans le support (1) est réalisé de manière qu'une fente existe entre le volet (2) entièrement sorti et le spoiler (20), tandis qu'une formation de fente est empêchée pour les positions intermédiaires précédentes du volet (2).

9. Voilure portante suivant revendication 1, caractérisée par le fait que la variation de la courbure de l'aile et l'actionnement du volet peuvent être effectués conjointement ou indépendamment l'un de l'autre.

FIG. 1

FIG. 2

EP 0 210 399 B1

FIG. 3

FIG. 4

FIG. 5